# EUROPÄISCHE PATENTSCHRIFT

(11) **EP 1 271 374 B1**
(45) Veröffentlichungstag und Bekanntmachung des Hinweises auf die Patenterteilung: **26.05.2004**
(21) Anmeldenummer: 02012662.9
(22) Anmeldetag: 07.06.2002
(51) Int. Cl.: G06F 17/60, G08G 1/127

(54) **Rechnergesteuertes Transportmanagement mit Vorausberechnung des Zeitverhaltens von Produktwerten**
Computer controlled transport management comprising precalculation of temporal behaviour of product values
Régie de transport commandée par ordinateur avec précalculation de la tenue temporelle des valeurs de produits

(30) Priorität: 26.06.2001 DE 10130279
(43) Veröffentlichungstag der Anmeldung: 02.01.2003
(73) Patentinhaber: BTT Bahn Tank Transport GmbH, Deutsche Bahn Gruppe, 55116 Mainz (DE)
(72) Erfinder: Matzke, Dietmar Günter, 61389 Schmitten (DE)
(74) Vertreter: Zinken-Sommer, Rainer

(56) Entgegenhaltungen:
- WO-A-01/35373
- WO-A-98/21703
- US-A- 5 983 198

## Beschreibung

Die Erfindung betrifft ein rechnergesteuertes Transportmanagementsystem mit Vorausberechnung des Zeitverhaltens von Produktwerten. Sie findet allgemein auf dem Gebiet des Transportwesens Anwendung und eignet sich besonders zur Ausführung von Transportaufgaben, bei denen bestimmte Anforderungen an die Produktwerte während und/oder nach Vollendung des Transportablaufes gestellt werden.

Bei der Bewältigung immer komplexer werdender Transportaufgaben im modernen Schienen-, LKW-, See-, Luft- und im kombinierten Verkehr müssen die einzelnen Produktionsabläufe des Transportprozesses flexibel und optimal aufeinander abgestimmt werden.
Zu den aufeinander abzustimmenden Einzelkomponenten des Transportablaufes zählen insbesondere:
- Auftragsmanagement
- zeitgerechtes Bereitstellen geeigneter Transportmittel mit ausreichender Frachtkapazität einschließlich ggf. notwendiger Vorbereitungsarbeiten auf die spezielle Transportaufgabe (z. B. Reinigung eines Tankcontainers für Lebensmitteltransporte) am Ausgangsort
- Disposition des Transportes und des Transportweges nach vorgegebenen oder im Prozessverlauf Relevanz erlangenden Beeinflussungen, beispielsweise durch Verkehrsleitwege
- Abwicklung des Transportprozesses nach einem vorgegebenen oder prozessabhängig angepassten Zeitplan
- Umschlag- oder Umladevorgänge entlang des Transportweges mit wiederholter kapazitäts- und zeitgerecht aufeinander abgestimmter Bereitstellung geeigneter und entsprechend vorbereiteter Transportmittel für den Weitertransport
- Überwachung spezifischer Produktwerte und des Ladegutes
- zeitgerechte Ankunft am Zielort unter Einhaltung spezifischer Produktwerte in vorgegebenen oder zulässigen Grenzen
- Servicemanagement

Es hat sich allgemein die Überzeugung durchgesetzt, dass eine optimale Steuerung solcherart komplexer und miteinander in ständiger Wechselwirkung stehender (Komponenten des Transportprozesses) erst einmal eine ortsunabhängige Erfassung von Prozessdaten voraussetzt, die alle wichtigen Zustände sowie die Position von Transportmittel und Ladegut jederzeit wiedergeben. Es ist ferner erforderlich, diese gewonnenen Informationen auf Anfrage hin oder automatisiert interessierten Anwendern zugänglich zu machen, damit diese in ein Schema zur Optimierung des Transportablaufes einfließen können.

Zur Erfüllung dieser Aufgabenstellungen ist eine Vielzahl von Lösungen bekannt geworden. Diesen liegt vorwiegend die Aufgabe zugrunde, durch geeignete technische Mittel einen Informationsaustausch zwischen einem meist als Zentrale oder Zentralrechner benannten festen Rechner oder Server und mehreren mit diesem Zentralrechner kommunizierenden mobilen Rechnerstationen entweder automatisch oder auf Anfrage hin herzustellen. Die mobile Rechnerstation ist dabei so konzipiert, dass diese entweder der zu transportierenden Ladung beigefügt wird oder aber unmittelbarer Bestandteil des Transportbehälters (z.B. Container) oder der Transportplattform (LKW, Eisenbahnwagen) ist. Standardmäßig umfasst die Datenübermittlung insbesondere Informationen über die aktuelle geografische Position der mobilen Rechnerstation, die Augenblicksgeschwindigkeit über Grund, Umgebungstemperatur und -druck, Temperatur und innerer Druck des Ladegutes sowie die Batteriespannung zur Energieversorgung der zumeist autark arbeitenden mobilen Rechnerstation.

So beschreibt die DE 196 51 146 ein Verfahren sowie eine Anordnung zur Verkehrsinformation und Verkehrsleitung. Einer anfragenden Stelle werden die gewünschten aktuellen Informationen zur Verfügung gestellt, wobei diese hierbei eine mobile Station ist, während die zentrale Recheneinheit die Aufgabe einer optimalen Koordinierung des Verkehrsablaufes unter Verwendung der von der mobilen Station gesendeten Daten übernimmt. Die beschriebene Lösung gestattet somit die Funktion eines Navigationsdienstes und schafft außerdem eine Orientierungshilfe in Bezug auf aktuelle Verkehrslagen und einer damit verbundene Routenbewertung. Die übermittelten Daten können auf Ausgangsparameter wie Orts-, Start- und Zielinformationen oder Streckeninformationen der Fahrt bezogen werden. Die Ortsbestimmung als solche soll über Koppelnavigation und GPS (Global Positioning System) erreicht werden. Die Datenkommunikation wird durch den im GSM (Global System for Mobile Communication) verfügbaren Kurznachrichtendienst abgewickelt, wobei im Gegensatz zu anderen VT-Diensten bei den Navigationsdaten der Cell Broadcast nicht benötigt wird, so dass nur Kurznachrichtendienste SMS-MT (Short Message System - Mobile terminated) und SMS-MO (Short Message System - Mobile originated) verwendet werden.

Aus der DE 196 46 954 ist ein Verfahren für ein Flottenmanagement bekannt, wobei es sich dabei um eine Flotte von Land- oder Wasserfahrzeugen handelt. Das Verfahren löst die Aufgabe, mehreren Anwendern einen Zugang zu einer Zentrale bzw. zu einem Zentralrechner und zwar auf der Basis konventioneller Festnetzverbindungen zu ermöglichen und somit den Datenverkehr bis hin zu den mobilen Rechnerstationen herzustellen, indem eine Vielzahl von Anwendern über Datenverbindungen mit einem Zentralrechner (Server) verbunden ist, und der Zentralrechner seinerseits über mehrere GSM-fähige Funk-Verbindungen zu den jeweils zu koordinierenden Fahrzeugen verfügt. Für die Standortbestimmung werden GPS-Empfänger verwendet, die in der Lage sind, die Signale von mehreren Navigationssatelliten auszuwerten. Die Festnetzverbindung des Zentralrechners zu den einzelnen Anwendern kann über das Internet erfolgen oder als ISDN- oder Datex-P-Verbindung ausgeführt sein. Der Datenaustausch vom Zentralrechner zur fahrzeugseitigen mobilen Rechnerstation erfolgt auf der Basis von Kurznachrichten SMS. Für einen Anwender (z.B. Spediteur) bedeutet dies, dass er Ortsangaben, technische Statusinformationen oder auftragsrelevante Informationen zwischen einem Fahrzeug und einer Zentrale kommunizieren kann. Mit einem solchen System entfallen aufwändige Suchtelefonate ebenso, wie fehlerhafte Übertragungen von Auftragsinformationen.

Es sind weiterhin Produkte im Bereich des Flottenmanagements auf den Markt gekommen, die - wie beispielsweise von der Firma Teldatrans GmbH - aufbauend auf diesen genannten Techniken mehrere Funktionen in einer einheitlichen Systemlösung miteinander verbinden. Zu diesen Funktionen zählen neben den Einrichtungen zur Fahrzeugortung und zur technischen Überwachung von Transportgut und Fahrzeug bereits auch die logistische Steuerung. In die Systemlösung integriert sind Telematik-Plattformen über das Mobilfunknetz oder über die Satellitenkommunikation, Zugriff auf den auf einem Server bereitgestellten Informationsgehalt via Internet, Flottenmanagement mit kompletter Tour-Aufzeichnung, Einsatzanalyse und Serviceplanung sowie eine ständig erreichbare Positionswiedergabe.

Ein rechnergesteuertes Transportmanagementsystem nach dem Oberbegriff des Anspruchs 1 ist aus der US-A-5 983 198 bekannt.

Ein wesentlicher Nachteil der bekannten Verfahren und Anordnungen besteht darin, dass diese auf der Basis der genannten Techniken einerseits zwar eine umfangreiche und präzise technische Überwachung bezüglich von Daten und Werten des Transportfahrzeuges und/oder des Ladegutes gewährleisten, andererseits aber eine effektive Rückwirkung auf den Transportprozess - wenn erforderlich - nur auf dem Wege modifizierter logistischer Einflussnahme oder von geänderten Dispositionen vorgesehen ist. Wenn aber das Erreichen von kritisehen Grenzwerten für einen zulässigen oder Soll-Zustand von Transportgütern einmal erkannt wurde, so ist ein bloßes Zurückgreifen auf einen möglicherweise geänderten logistischen Ablauf nur ein eingeschränktes Mittel zur Abwendung eines drohenden Schadens.

Die zu beantwortenden Fragestellungen eines Anwenders an bisherige Transportmanagementsysteme konzentrieren sich somit auf die Schwerpunkte:
- Wo befindet sich der Transport ?
- Welche Ursachen haben Abweichungen von Soll-Positionen und wann kommt der Transport günstigstenfalls am Zielort an ?
- In welchem Zustand befindet sich das Transportgut bei Ankunft, kann eine zweckgemäße Verwendung erfolgen, oder ist das Transportgut möglicherweise verdorben ?

Der vorliegenden Erfindung liegt die Aufgabe zugrunde, ein System zu schaffen, mit dem bei Ankunft an einem Zielort vorgegebene oder zulässige Produktwerte des Ladegutes in höherem Maße und weitgehend selbständig eingehalten werden.

Diese Aufgabe wird in Verbindung mit dem Oberbegriff des Patentanspruches 1 erfindungsgemäß dadurch gelöst, dass das integrale Regelsystem einen Transportablauf entlang seiner Einzelphasen auf die Einhaltung von Grenzwerten hin überwacht, die in einem Leitwegkorridor, in einem Zeitkorridor und in einem Produktzustandskorridor durch jeweils aktuelle Parameter definiert sind, dass ein Verhaltensmuster der mobilen Clients durch den Server festgelegt wird, indem die jeweils gültigen Parameter des Leitweg-, Zeit- und Produktzustandskorridors vom zentralen Server fortlaufend an die aktuelle Situation angepasst und an die mobilen Clients übermittelt werden, dass das integrale Regelsystem auf dem Wege von aktuell ermittelten Prozesszustandsdaten und im direkten Vergleich mit statistischen Ergebnissen von Prozesszustandsdaten aus Kategorien vorausgegangener ähnlicher oder vergleichbarer Konstellationen selbständig optimale Parameter für eine Neuformulierung des Leitweg-, Zeit- und Zustandskorridors festlegt und dass ein fortgesetzter Soll-Ist-Vergleich zwischen vorausberechneten und tatsächlich eingetretenen Prozesszuständen statistisch ausgewertet und zu einer fortlaufend genaueren Bewertung von vorauszuberechnenden Prozesszuständen ähnlicher Kategorie oder aber zur Erkennung fehlerhafter Zustandsgrößen benutzt wird.

Die mit der Erfindung erzielten Vorteile bestehen insbesondere darin, verbesserte und genauere Vorhersagen über das zeitliche Eintreffen und den Zustand des Transportfahrzeuges und des Transportgutes einschließlich ihres Zeitverhaltens zu ermöglichen und Aktionen mit der größten Zweckmäßigkeit für den Transportverlauf während und nach Beendigung des Transportes abzuleiten.

Der Leitwegkorridor ist im wesentlichen gekennzeichnet durch die Wahl eines Transportmittels einschließlich der Be- und Entladeverfahren, den Verlauf der Transportroute, durch Übergänge entlang der Transportroute, etwa von der Straße auf die Schiene und umgekehrt, sowie durch Entfernungs- und Zeitwerte, die sich infolge von spezifizierten Transportrouten ergeben. Für die Initialisierung des Leitwegkorridors, d.h. das Festlegen seiner primären Gestaltung, die sich an kundenspezifischen Vorgaben orientiert, können bekannte Verfahrensweisen eines Disponenten oder einer Dispositionssoftware verwendet werden.

Der Zeitkorridor wird im wesentlichen durch Transportbeginn und -ende sowie durch alle Transportzwischenpunkte bestimmt, aus denen sich feste Zeitfenster ergeben. Der Zeitkorridor wird beeinflusst durch Fahrzeiten entlang zurückgelegter oder zurückzulegender Fahrstrecken sowie durch vorbestimmte oder unerwartet eintretende Ereignisse. Zu diesen Ereignissen zählen Zustandsänderungen im Transportfluss (Verkehrsstau, Abfertigungszeiten, Fährbetriebszeiten), aber auch Zustandsänderungen von Produktwerten, die sich auf eine Zeitbasis abbilden lassen, wie beispielsweise Auskühlzeiten eines flüssigen Transportgutes in einem Tankcontainer.

Mit dem Produktzustandskorridor werden die Zustände in den Produktwerten definiert, die für die Qualität des Transportgutes oder für einen, beispielsweise zum Auslieferungszeitpunkt vorgesehenen, bestimmten Produktzustand maßgeblich sind. Der Produktzustandskorridor wird vorzugsweise in die Kategorien optimal, tolerabel oder kritisch unterteilt. Da bestimmte Produktzustände nicht nur zum Zeitpunkt einer zufälligen Abfrage, sondern vielmehr in ihrer Tendenz von besonderem Interesse sind, muss der Produktzustandskorridor erfindungsgemäß stets dynamisch betrachtet und vor dem Hintergrund von Bedingungen und Kriterien beurteilt werden, die aus den Zeit- und Leitwegkorridoren hergeleitet werden.

Für die erfindungsgemäße Beurteilung eines abzuwickelnden Transportauftrages sind folglich zunächst der oder die Leitwegkorridore zu bestimmen, die den Transport aktuell oder vorausschauend beeinflussen werden. Aus der Kenntnis der Leitwegkorridore wird die Rückwirkung auf diejenigen Zeitkorridore hergestellt, die unmittelbar von den festgestellten Leitwegkorridoren betroffen sind. Es sind bis dahin alle Einflüsse berücksichtigt, die sich aus dem Streckenverlauf, der Art des Transportmittels mit den Be- sowie Entladevorgängen, aus Umschlag- und Umladeprozessen und aus allen bis dahin bekannten verkehrsrelevanten Bedingungen ergeben. Die solcherart erlangten Informationen über den oder die zu veranschlagenden Zeitkorridore und Leitwegskorridore gestatten es, über den aktuellen Zustand bestimmter sporadisch oder in zyklischer Folge abgefragter Produktwerte hinausgehend, dadurch auch deren weiteren zeitlichen Verlauf vorauszubestimmen und dabei alle in Frage kommenden Einflussgrößen zu berücksichtigen. Zweckmäßigerweise erfolgen die Prognosebetrachtungen unter Bezugnahme auf feste Zeitfenster, die beispielsweise durch bestimmte Transportfestpunkte repräsentiert sein können.

Die vorteilhafte Wirkung des erfindungsgemäßen Verfahrens beschränkt sich nicht nur auf genauere und besser an aktuelle Gegebenheiten angepasste Vorherbestimmungen über das zeitliche Eintreffen und über den Zustand des Transportfahrzeuges und des Transportgutes am Zielort, sondern erlaubt es aus diesen genaueren Prognosen heraus ganz besonders, zweckmäßige Aktionen vorzuschlagen oder automatisch einzuleiten, wenn diese infolge von unmittelbar eingetretenen und erkannten oder aber prognostizierten Abweichungen erforderlich sind oder erforderlich werden. Dieses führt im Ergebnis zu einer geänderten Parametrierung an dem Leitwegskorridor, was insbesondere die Wahl von Alternativrouten bedeutet, an dem unmittelbar betroffenen Zeitkorridor sowie am Produktzustandskorridor. Eine fortgesetzte Anwendung dieser optimal angepassten Korridore führt sodann dazu, dass die Produktwerte, der Fahrzeugzustand und/oder der Eintreffzeitpunkt an einem Zielort den gewünschten Vorgaben sehr viel besser entsprechen.

Die Erfindung wird nachfolgend anhand eines Ausführungsbeispiels näher erläutert.

Unter Anwendung der erfindungsgemäßen Merkmale soll ein Transportablauf optimiert werden, dessen Aufgabe darin besteht, eine Verfrachtung von flüssigen Lebensmitteln von einem Standort A zu einem anderen Standort B zu bewirken.

Damit die flüssigen Lebensmittel während des Transportes ihren einwandfreien Zustand beibehalten, muss während dieser Zeit eine bestimmte Temperatur - eine Transporttemperatur - erforderlichenfalls durch Kühlung/Heizung gewährleistet werden. Ober- und unterhalb der vorgegebenen Transporttemperatur darf eine Temperaturschwankung zwischen einem unteren und einem oberen Temperaturgrenzwert stattfinden. Zum Zeitpunkt der Anlieferung des Transportgutes indessen wird für den Lieferzustand die Einhaltung einer anderen, nämlich eine gegenüber der Transporttemperatur erhöhten Temperatur - eine Liefertemperatur - vorgegeben. Für die Qualität des Transportgutes ist außerdem ein bestimmter vorgegebener Druck, der Transportdruck, einzuhalten. Auch der Transportdruck darf zwischen einem oberen und einem unteren Druckgrenzwert Schwankungen aufweisen.

Für den Transport wird ein Spezialcontainer ausgewählt. Dieser Spezialcontainer zeichnet sich durch Vorrichtungen zum Kühlen/Heizen des Transportgutes aus. Er wird mit dem Ladegut auf einen erhöhten Betriebsdruck gefüllt, und nach dem Befüllen druckdicht verschlossen. Unmittelbar konstruktiv verbunden mit dem Spezialcontainer ist eine Baugruppe, die die mobile Rechnerstation, den Client aufnimmt. Dieser mobile Client beinhaltet das Regelmodul für die Messung und Überwachung der vorgegebenen Produktwerte, Vorrichtungen zur Ermittlung der Position über GPS, Einrichtungen zur Geräteverwaltung sowie die Telematik-Anlagen für die Datenübertragung über GSM und zur Erzielung einer flächendeckenden Verfügbarkeit, ebenfalls solche zur Nutzung der Immarsat-D+-Satellitenkommunikation. Für eine unabhängige Energieversorgung verfügt der Spezialcontainer über ein Solarmodul.

In einem ersten Verfahrensschritt ist ein Leitwegkorridor festzulegen. Er ist gekennzeichnet durch die Wahl eines bestimmten Typs für den Spezialcontainer. Für diesen sind weiterhin bestimmte Transportträger auswählbar. Kann das Ziel mit den ausgewählten Transportträgern erreicht werden, so sind mit den üblichen Mitteln der Disposition die einzelnen Transportwege in jeweils aufeinander abgestimmter Form festlegbar. Diese Transportwege begründen ihrerseits Leitwegkorridore, die gekennzeichnet sind durch Angaben zu den entlang dieser Leitwege üblicherweise zu erwartende Witterungsbedingungen.

Es können weiterhin unter Berücksichtigung aller Be- und Entladeprozesse sowie aus unterwegs vorgesehenen Umladevorgängen des Spezialcontainers die Zeitkorridore festgelegt werden. Sie werden berechnet aus Transportzeiten für die ausgewählten Transportrouten und aus den Umladezeiten. Bei der Berechnung der Zeitkorridore finden außerdem aktuelle Zustandsdaten der Transportroute Verwendung, etwa über TMC (Traffic Message Channel) automatisch erfragte Daten zu Verkehrssituationen. Diese werden zusätzlich assimiliert mit Vergleichswerten aus Prozesszuständen ähnlicher oder vergleichbarer Kategorien, die mit statistischen Mitteln aus vorausgegangenen Prozessabläufen aufbereitet wurden.

Maßgebliche Kriterien für den Produktzustand sind bereits in Form der vorgegebenen Werte für die Transporttemperatur sowie für den Transportdruck festgelegt. Der Produktzustandskorridor wird damit in einem ersten Ansatz genau durch diese zugehörigen Werte für den jeweiligen oberen und unteren Grenzwert beschrieben.

Somit sind die Randbedingungen für eine Initialisierung aller drei Korridore definiert. Diese bilden als Leitwerte die Vorgaben für das integrale Regelsystem, dessen Aufgabe es nun ist, in einem weitgehend automatisierten Ablauf dafür zu sorgen, dass die definierten Korridore eingehalten werden:
1) Indem die einzelnen Zeitkorridore des Transportablaufes erstmals definiert sind, ist damit zugleich deren vorläufige Akzeptanz (etwa durch einen Auftraggeber) verifiziert. Somit ist die Funktion des integralen Regelsystems als erstes auf die Einhaltung der oben beschriebenen Produktwertkorridore konzentriert und zwar genau solange, wie keine Abweichungen von den festgelegten oder bestimmten Zeit- und Leitwegskorridoren ermittelt werden. Dieser Regelauftrag wird dem mobilen Client übertragen, dem der zentrale Server dazu die zu diesem Zeitpunkt gültigen Temperaturwerte, Druckwerte sowie die zugehörigen Grenzwerte für die Oberwerte und Unterwerte übermittelt.
2) Eine fortlaufende Kontrolle auf die Einhaltung der Zeit- und Leitwegskorridore erfolgt durch regelmäßige oder veranlasste Meldungen des mobilen Clients an den zentralen Server. Die dabei gesendeten Daten beinhalten Informationen über die aktuelle geografische Position des mobilen Clients, die Augenblicksgeschwindigkeit über Grund, die Umgebungstemperatur und die Temperatur des Transportgutes, den inneren Druck des Spezialcontainers, die Batteriespannung zur Energieversorgung des mobilen Clients sowie die Energievorräte zum Kühlen/Heizen des Transportgutes. Die Meldefrequenzen, mit denen der mobile Client Daten an den zentralen Server übermittelt, werden durch äußere Umstände, in denen sich der Transport befindet, bestimmt. Das bedeutet, bei schnellen Änderungen, speziell im Verlauf der Umgebungstemperatur, und insbesondere, wenn kritische Bedingungen erreicht sind, wird die Meldefrequenz sehr viel höher gewählt werden, als bei über längere Zeitabschnitte vorliegenden eher statischen Bedingungen. Die Meldefrequenz ist auch dann auf ein absolutes Minimum herabgesetzt, wenn Umgebungsbedingungen infolge einer Unterbrechung der Energiezufuhr über das Solarmodul zum sorgsamen Umgang mit den autarken Energiereserven zwingen, während gleichzeitig kein kritischer Verlauf an den relevanten Umgebungseinflüssen stattfindet.
3) Auf der Basis der übermittelten Daten ist es dem zentralen Server möglich, jederzeit den Transportfortschritt zu beurteilen, das heißt, die Sollpositionen des Leitwegkorridors mit seinen Istpositionen zu vergleichen, und zwar vor dem Hintergrund des jeweiligen Zeitkorridors. Aus diesem Vergleich heraus ermittelt der zentrale Server Regeln, die dem mobilen Client übermittelt werden und die sein Verhaltensmuster entweder bestätigen oder aber neu festlegen, das heißt, der Produktzustandskorridor wird neu formuliert. Erfindungsgemäß genügt es dabei nicht, die aktuellen Prozesszustandsdaten lediglich abzurufen und mit den zur Verfügung stehenden Mitteln in Bereiche zu zwingen, der durch die gültigen unteren und oberen Grenzwerte vorgegeben sind. Vielmehr ist hierfür der weitere tendenzielle Verlauf der Produktzustandswerte ausschlaggebend. Ein solcher tendenzieller Verlauf ist begründet durch
   - vorherbestimmte meteorologische Verhältnisse mit erheblich niedrigeren Temperaturen entlang der nächsten zu befahrenden Transportroute, mit der Konsequenz, dass ein normalerweise notwendiger Kühlvorgang nicht gestartet wird, da eine Abkühlung von außen ohnehin nach einer berechneten Zeit einsetzt
   - ein Ausweichen auf alternative Routen mit entsprechend modifizierten Leitwegskorridoren, das infolge via TMC ermittelter Verkehrsstörungen auf der ursprünglichen Transportroute erforderlich wird, was zur Neuberechnung der zugehörigen Zeitkorridore mit neuen Werten für die Produktzustandskorridore führt
   - das Vorausberechnen von Zieldaten für Produktwerte infolge eines Einbeziehens von Ereignissen, insbesondere Ankunft am Zielort, die ein kalkuliertes Abkühlen/Erwärmen des Transportgutes durch die zu erwartenden Witterungsverhältnisse auf natürlichem Wege ermöglichen.
   - das Berücksichtigen eines gegebenenfalls reduzierten Energievorrates zum Heizen/Abkühlen des Transportgutes mit der Konsequenz, alternative Transportrouten zu ermitteln, die den Zeit- und den Produktzustandskorridor in einer Weise modifizieren, dass das Transportgut kontinuierlich im Bereich der vorgegebenen Grenzwerte bleibt und nicht verdirbt

Zur exakten Berechnung eines tendenziellen Verlaufes in den Produktzustandswerten müssen die technischen Bedingungen genau erfasst sein, die diesen beeinflussen. Dies geschieht über die Wärmeaustausch-Kennlinie des Spezialcontainers. Diese wird wesentlich beeinflusst von seiner Isolierung, vom Fahrtwind, vom Temperaturgefälle und von der Wärmekapazität der beteiligten Stoffe.

Alle Prozesse, die im Verlauf von Transporten durch die Kategorien Leitweg-, Zeit- und Produktzustandskorridor beschrieben werden können, werden einer fortlaufenden statistischen Aufbereitung und Bewertung zugeführt. Dafür werden Bewertungskategorien gebildet, die die aufgesammelten Informationen immer wieder auf vergleichbare Situationen anwendbar machen. Diese führen nach Erzielung einer genügend starken statistischen Sicherheit schließlich zu einem adaptiv lernfähigen System der automatischen Einflussnahme auf den Transportverlauf mit Vorausberechnung des Zeitverhaltens des Ladegutes.

Es ist auf diese Weise auch möglich, aus Abweichungen gemessener Zustandsdaten gegenüber bis dahin ermittelten statistisch gesicherten Mittelwerten unter vergleichbaren Bedingungen technische Defekte an den Transportträgern - beispielsweise an der Isolierung des Spezialcontainers - zu erkennen und zu lokalisieren, indem die gemessenen Werte während eines Temperaturaustausches verglichen werden mit einem Mittelwert aus bis dahin ermittelten Austauschverläufen unter vergleichbaren Bedingungen.

## Patentansprüche

1. Rechnergesteuertes Transportmanagementsystem mit Vorausberechnung des Zeitverhaltens von Produktwerten mit mobilen Rechnerstationen, die über Einrichtungen zur Fahrzeugortung und zur technischen Überwachung von Transportgut und Fahrzeug und über Telematik-Vorrichtungen für das Mobilfunknetz oder für die Satellitenkommunikation verfügen, mit einem zentralen Server, der die bereitgestellten Informationen Anwendern über das Internet oder Datenkommunikation zugänglich macht, sowie mit einem Flottenmanagementsystem mit Tour-Verfolgung, wobei die mobilen Rechnerstationen als Clients des zentralen Servers ausgebildet und mit diesem Server zu einem integralen Regelsystem zusammengeführt sind, und Anwender über den Server und über das Internet oder andere Datenverbindungen jederzeit Zugang zu allen verfügbaren Informationen über Positionen sowie zum Fahrzeugzustand und zum Zustand des Transportgutes haben, **gekennzeichnet dadurch, dass** dieses integrale Regelsystem einen Transportablauf entlang seiner Einzelphasen auf die Einhaltung von Grenzwerten hin überwacht, die in einem Leitwegkorridor, in einem Zeitkorridor und in einem Produktzustandskorridor durch jeweils aktuelle Parameter definiert sind, dass ein Verhaltensmuster der mobilen Clients durch den Server festgelegt wird, indem die jeweils gültigen Parameter des Leitweg-, Zeit- und Produktzustandskorridors vom zentralen Server fortlaufend an die aktuelle Situation angepasst und an die mobilen Clients übermittelt werden, dass das integrale Regelsystem auf dem Wege von aktuell ermittelten Prozesszustandsdaten und im direkten Vergleich mit statistischen Ergebnissen von Prozesszustandsdaten aus Kategorien vorausgegangener ähnlicher oder vergleichbarer Konstellationen selbständig optimale Parameter für eine Neuformulierung des Leitweg-, Zeitund Zustandskorridors festlegt und dass ein fortgesetzter Soll-Ist-Vergleich zwischen vorausberechneten und tatsächlich eingetretenen Prozesszuständen statistisch ausgewertet und zu einer fortlaufend genaueren Bewertung von vorauszuberechnenden Prozesszuständen ähnlicher Kategorie oder aber zur Erkennung fehlerhafter Zustandsgrößen benutzt wird.

2. Transportmanagementsystem nach Anspruch 1, **gekennzeichnet dadurch, dass** aus Abweichungen von gemessenen Prozesszustandsdaten gegenüber ermittelten statistischen Mittelwerten von Prozesszustandsdaten unter vergleichbaren Bedingungen technische Defekte an Transportträgern erkannt und lokalisiert werden.

## Claims

1. A computer-controlled transport management system with preliminary calculation of the time behaviour of product values comprising mobile computer stations having devices for vehicle location and for technical monitoring of transported materials and vehicle, and having telematics apparatus for the mobile radio network or for satellite communication, comprising a central server which makes the prepared information accessible to users via the internet or data communication, and comprising a fleet management system with route tracking, wherein the mobile computer stations are constructed as clients of a central server and are brought together with this server to form an integral control system and users have access at any time via the server and via the internet or other data connections to all available information on positions and on the vehicle status and on the status of the transported material, **characterised in that** this integral control system monitors a transport sequence along its individual phases for adherence to limiting values which are defined in a routing corridor, in a time corridor and in a product status corridor by respectively up-to-date parameters, that a behaviour pattern of the mobile client is stipulated by the server, wherein the respectively valid parameters of the routing, time and product status corridors are continually matched to the current situation by the central server and are communicated to the mobile clients, that the integral control system automatically specifies optimum parameters for a re-formulation of the routing, time and status corridor by way of currently determined process status data and in direct comparison with statistical results of process status data from categories of previous similar or comparable combinations, and that a continued desired-actual comparison between pre-calculated and actually occurring process statuses is evaluated statistically and is used for a continuously more accurate evaluation of pre-calculated process statuses of similar category or however for identification of incorrect variables of state.

2. The transport management system according to claim 1, **characterised in that** technical defects on transport carriers can be identified and localised from deviations of measured process status data compared with determined statistical averages of process status data under comparable conditions.

## Revendications

1. Système de gestion des transports assisté par ordinateur, avec calcul préalable du comportement dans le temps de valeurs de produits, avec des postes d'ordinateurs mobiles, lesquels disposent d'installations destinées à la localisation des véhicules et à la surveillance technique de marchandises à transporter et à celle du véhicule et de dispositifs télématiques pour le réseau radioélectrique mobile ou pour la communication par satellites, avec un serveur centralisé, qui par l'intermédiaire d'Internet ou d'une communication de données met les informations préparées à la disposition des utilisateurs et avec un système de gestion de flotte avec suivi des tournées, les postes d'ordinateurs mobiles étant conçus sous forme de clients de serveur centralisé et étant regroupés avec ce serveur en un système de réglage intégral, **caractérisé en ce que** tout au long de ses phases individuelles, ce système de réglage intégral surveille un cycle de transport au niveau du respect de valeurs limites, qui dans un corridor d'itinéraire de voie, dans un corridor de temps et dans un corridor d'état du produit sont définies par des paramètres respectivement actuels, **en ce qu'**un modèle de comportement des clients mobiles est déterminé par le serveur, par adaptation en continu du corridor d'itinéraire de voie, du corridor de temps et du corridor d'état à la situation actuelle et par leur transmission aux clients mobiles, des utilisateurs ayant à tout moment accès à toutes les informations disponibles par l'intermédiaire de positions ainsi qu'à l'état du véhicule et à celui des marchandises transportées par l'intermédiaire du serveur, par l'intermédiaire d'Internet ou par l'intermédiaire d'autres liaisons de données, **en ce que** via des données d'état du processus actuellement détectées et par comparaison directe de résultats statistiques de données d'état du processus à partir de catégories de constellations précédentes analogues ou comparables, des paramètres optimaux pour une reformulation du corridor d'itinéraire de voie, du corridor de temps et du corridor d'état sont déterminés de manière autonome et **en ce qu'**une comparaison suivie de l'état de consigne avec l'état effectif entre des états préalablement calculés et des états réellement intervenus dans le processus est statistiquement évaluée et utilisée pour une évaluation continue plus précise d'états de processus de catégorie identique qui sont à calculer préalablement ou encore pour l'identification de valeurs d'état erronées.

2. Système de gestion des transports selon la revendication 1, **caractérisé en ce que** des défauts techniques sur des supports de transport sont identifiés et localisés à partir d'écarts entre des données mesurées pour l'état du processus et des valeurs moyennes statistiquement déterminées pour des données d'état du processus, sous des conditions comparables.
